# EUROPÄISCHE PATENTSCHRIFT

(11) **EP 3 985 499 B1**
(45) Veröffentlichungstag und Bekanntmachung des Hinweises auf die Patenterteilung: **22.03.2023**
(21) Anmeldenummer: 20306205.4
(22) Anmeldetag: 14.10.2020
(51) Int. Cl.: G06F 7/58

(54) **VERFAHREN ZUR ERZEUGUNG VON ZUFALLSZAHLEN**
METHOD FOR GENERATING RANDOM NUMBERS
PROCÉDÉ DE GÉNÉRATION DES NOMBRES ALÉATOIRES

(43) Veröffentlichungstag der Anmeldung: 20.04.2022
(73) Patentinhaber: Schneider Electric Industries SAS, 92500 Rueil-Malmaison (FR)
(72) Erfinder: HIESER, Alexander, 97072 Würzburg (DE); ZINN, Marcus Dr., 63110 Rodgau (DE)
(74) Vertreter: Manitz Finsterwald Patent- und Rechtsanwaltspartnerschaft mbB

(56) Entgegenhaltungen:
- CN-U- 206 848 996
- US-A1- 2009 262 928
- ALIN SUCIU ET AL: "Unpredictable random number generator based on mobile sensors", INTELLIGENT COMPUTER COMMUNICATION AND PROCESSING (ICCP), 2011 IEEE INTERNATIONAL CONFERENCE ON, IEEE, 25. August 2011 (2011-08-25), Seiten 445-448, XP032063543, DOI: 10.1109/ICCP.2011.6047913 ISBN: 978-1-4577-1479-5
- JAN KRHOVJÁK ET AL: "The Sources of Randomness in Mobile Devices", PROCEEDING OF THE 12TH NORDIC WORKSHOP ON SECURE IT SYSTEMS, 1. Januar 2007 (2007-01-01), Seiten 1-12, XP055498422,

## Beschreibung

Die vorliegende Erfindung betrifft ein Verfahren zur Erzeugung von Zufallszahlen, insbesondere für kryptographische Anwendungen. Für kryptographische Anwendungen, beispielsweise die gesicherte bzw. verschlüsselte Kommunikation zwischen zwei Teilnehmern, werden idealerweise "echt" zufällige Zahlen benötigt. Da in der Praxis echt zufällige Zahlen häufig nur mit großem Aufwand zu erzeugen sind, werden stattdessen auch Pseudozufallszahlen verwendet, welche dann ebenfalls ein ausreichendes Maß an Zufälligkeit aufweisen, um eine Angreifbarkeit der verschlüsselten Kommunikation zu verhindern.

Eine solche verschlüsselte Kommunikation wird insbesondere auch bei der Steuerung von industriellen Prozessen immer wichtiger. So soll die Kommunikation mit Feldgeräten, welche zur Steuerung und Überwachung von Industrieprozessen dienen, idealerweise auch verschlüsselt erfolgen. Die Feldgeräte können beispielsweise Aktoren des industriellen Prozesses steuern und Sensordaten aus dem industriellen Prozess auswerten. Durch eine verschlüsselte Kommunikation mit den Feldgeräten bzw. der Feldgeräte untereinander kann eine Angreifbarkeit oder Manipulierbarkeit des Industrieprozesses verhindert werden.

Es besteht also ein grundsätzliches Bedürfnis für kryptographische Anwendungen, welche beispielsweise eine gesicherte Kommunikation in industriellen Prozessen ermöglicht. Für solche kryptographische Anwendungen sind wiederum die eingangs erwähnten Zufallszahlen unabdingbar, wobei die Zufallszahlen möglichst zufällig sein sollen. Zufällig bedeutet in diesem Zusammenhang, dass die Zufallszahl nicht vorhersagbar ist, selbst wenn ein Angreifer sämtliche Parameter des die Zufallszahl erzeugenden Systems kennt.

Es ist daher die der Erfindung zugrundeliegende Aufgabe, ein Verfahren zur Erzeugung von Zufallszahlen anzugeben, bei welchem derart stark zufällige Zufallszahlen erzeugt werden, sodass ein sicherer Einsatz der Zufallszahlen in kryptographischen Anwendungen möglich ist.

Diese Aufgabe wird durch ein Verfahren gemäß Anspruch 1 gelöst.

Das Verfahren der Erfindung betrifft die Erzeugung von Zufallszahlen für kryptographische Anwendungen, wobei bei dem Verfahren
- mittels einer Erfassungseinheit eine Aufnahme einer Umgebung erzeugt wird,
- die Aufnahme mittels einer Anzeigeeinrichtung dargestellt wird,
- ein virtuelles Objekt durch einen Benutzer in der Darstellung der Aufnahme in der Umgebung positioniert wird,
- für die Umgebung Realwelt-Koordinaten für Realwelt-Punkte in einem Realwelt-Koordinatensystem bestimmt werden,
- für das virtuelle Objekt Virtuellwelt-Koordinaten für einen oder mehrere Virtuellwelt-Punkte in einem Virtuellwelt-Koordinatensystem bestimmt werden,
- zumindest die Realwelt-Koordinaten eines Realwelt-Punktes der Umgebung und die Virtuellwelt-Koordinaten eines Virtuellwelt-Punktes des virtuellen Objekts verwendet werden, um eine Zufallszahl zu erzeugen, und
- die Zufallszahl und/oder einen von der Zufallszahl abgeleiteten Wert bevorzugt bei einer kryptographischen Anwendung eingesetzt wird. Das Verfahren könnte alternativ auch bereits nach dem Erzeugen der Zufallszahl enden, wobei die Zufallszahl beispielsweise erst gespeichert und später in einer kryptographischen Anwendung eingesetzt wird.

Kurz gesagt wird also einem Benutzer eine Darstellung der Umgebung angezeigt, wobei der Benutzer dann in die Darstellung der Umgebung an beliebiger Stelle und in beliebiger Orientierung das virtuelle Objekt platziert. Erfindungsgemäß hat sich gezeigt, dass bei einem solchen Vorgehen sehr viele Quellen von Zufälligkeit existieren, sodass die insbesondere aus den Realwelt-Koordinaten und den Virtuellwelt-Koordinaten erzeugte Zufallszahl ebenfalls stark zufällig ist. Durch die starke Zufälligkeit wird wiederum die Angreifbarkeit der kryptographischen Anwendung, in welcher die erzeugte Zufallszahl eingesetzt wird, stark verringert.

Nachfolgend wird das Verfahren nochmals detaillierter beschrieben.

Die Erfassungseinheit kann beispielsweise eine Kamera sein, welche z. B. in einem Smartphone und dergleichen angeordnet ist. Die Aufnahme der Umgebung kann dann insbesondere auf einem Bildschirm (d. h. der Anzeigeeinrichtung) dargestellt werden. Ist der Bildschirm berührungsempfindlich, so kann ein Benutzer das virtuelle Objekt z.B. mit den Fingern in der Darstellung der Umgebung verschieben und grundsätzlich beliebig positionieren.

Durch die Kombination der Darstellung der Umgebung, d. h. der Realität, und eines virtuellen Objekts, welches für den Benutzer sich tatsächlich in der realen Umgebung zu befinden scheint, wird eine so genannte "erweiterte Realität" oder "Augmented Reality" geschaffen. Die Augmented Reality wird dementsprechend mittels der Anzeigeeinrichtung sichtbar.

Obwohl der Benutzer auf der Anzeigeeinrichtung üblicherweise nur zwei Dimensionen zur Verfügung hat, kann es vorgesehen sein, das virtuelle Objekt in drei Dimensionen in der Umgebung zu positionieren bzw. zu platzieren. Hierzu kann es beispielsweise vorgesehen sein, dass durch ein Vergrößern oder Verkleinern des virtuellen Objekts ein Verschieben in der Tiefe möglich ist. Insbesondere können also sowohl die Realwelt-Koordinaten als auch die Virtuellwelt-Koordinaten jeweils drei Komponenten aufweisen und dementsprechend einen dreidimensionalen Raum repräsentieren.

Das virtuelle Objekt kann bevorzugt durch den Benutzer ausgewählt werden, wodurch bereits eine Quelle von Zufälligkeit bzw. Entropie geschaffen wird. Das Objekt kann beliebiger Natur sein, beispielsweise ein Tier, ein Gegenstand, Buchstaben, Zahlen, Symbole usw.

Bei der Bestimmung von Realwelt-Koordinaten für Realwelt-Punkte in der Umgebung können insbesondere markante Punkte, beispielsweise Ecken, Kanten, Stellen mit besonderen Farben und/oder dergleichen, verwendet werden, für welche die Realwelt-Koordinaten bestimmt werden. Je nach Umgebung werden sich die Realwelt-Koordinaten der Realwelt-Punkte stark unterscheiden, sodass hier wiederum eine Entropiequelle für die Erzeugung der Zufallszahl besteht. Die Realwelt-Koordinaten können insbesondere auch durch eine API ("Application Programming Interface") zur Verfügung gestellt werden, wie später noch ausgeführt wird.

Auch die Bestimmung der Virtuellwelt-Koordinaten kann als Quelle von Zufälligkeit genutzt werden, da sich die Virtuellwelt-Koordinaten je nach Positionierung des virtuellen Objekts ändern. Zudem können an dem virtuellen Objekt ein oder mehrere Virtuellwelt-Punkte zufällig bestimmt oder festgelegt werden, für welche die Virtuellwelt-Koordinaten dann ermittelt werden, wodurch auch hier wiederum eine Zufälligkeit ins Spiel gebracht wird.

Es ist ersichtlich, dass durch die Kombination verschiedener Quellen von Zufälligkeit die erfindungsgemäß erzeugte Zufallszahl insgesamt einer starken Zufälligkeit unterliegt und daher gut für kryptographische Anwendungen geeignet ist.

Es sei klargestellt, dass das "Verwenden" der Realwelt- und Virtuellwelt-Koordinaten bei der Erzeugung der Zufallszahl bedeuten kann, dass die Koordinaten beliebig miteinander verknüpft, miteinander mathematisch verrechnet, logisch verknüpft, aneinander angereiht und/oder dergleichen mehr werden können. Die Erzeugung der Zufallszahl wird insbesondere von einer elektronischen Recheneinrichtung ausgeführt, die beispielsweise in einem Smartphone oder einem Tablet vorhanden sein kann.

Weitere Ausführungsformen der Erfindung sind der Beschreibung, den Unteransprüchen sowie den Zeichnungen zu entnehmen.

Gemäß einer ersten Ausführungsform umfasst das Erzeugen der Zufallszahl, dass ein Vektor zwischen zumindest einem Punkt der Umgebung und einem Punkt des virtuellen Objekts ermittelt und für die Zufallszahl verwendet wird. Zur Berechnung des Vektors sind somit die Realwelt-Koordinaten und die Virtuellwelt-Koordinaten des jeweiligen Punkts zu verwenden (d.h. z.B. eines Realwelt-Punktes in der Umgebung und eines anderen/nicht entsprechenden Virtuellwelt-Punktes der Virtuellwelt). Insbesondere werden jeweils die Werte der Realwelt-Koordinaten von den Werten der Virtuellwelt-Koordinaten subtrahiert, um einen entsprechenden Vektor zu erhalten. Die Werte (z.B. der Komponenten) in dem Vektor können wiederum auf beliebige Weise bei der Erstellung der Zufallszahl verwendet werden, so können sie untereinander und/oder auch mit den Realwelt- und/oder Virtuellwelt-Koordinaten verknüpft, verrechnet, aneinander angereiht, etc. werden. Insbesondere können die für den Vektor verwendeten Realwelt-Koordinaten und Virtuellwelt-Koordinaten zufällig oder von einem Benutzer gewählt sein, wodurch wiederum eine Entropiequelle bei der Erstellung der Zufallszahl hinzugefügt wird.

Gemäß einer weiteren Ausführungsform umfasst das Erzeugen der Zufallszahl, dass zumindest die Realwelt-Koordinaten eines Realwelt-Punktes der Umgebung und die Virtuellwelt-Koordinaten eines Virtuellwelt-Punktes des virtuellen Objekts hintereinander gereiht werden. Zumindest ein Teil der Zufallszahl (oder auch die gesamte Zufallszahl) können dann aus hintereinander gereihten Werten der Koordinaten bestehen. Umfassen die Werte der Koordinaten beispielsweise ein Komma, so kann dieses einfach entfernt werden. Alternativ können auch die Zahlenwerte hinter dem Komma abgeschnitten werden.

Gemäß einer weiteren Ausführungsform werden Realwelt-Koordinaten in Virtuellwelt-Koordinaten und/oder Virtuellwelt-Koordinaten in Realwelt-Koordinaten transformiert, wobei die transformierten Koordinaten bei der Erzeugung der Zufallszahl verwendet werden. Nachdem die Lage des Realwelt-Koordinatensystems relativ zur Lage des Virtuellwelt-Koordinatensystems zufällig ist, wird diese Zufälligkeit als weitere Entropiequelle durch die Transformation der Koordinaten in die Erzeugung der Zufallszahl eingebracht. Die Verwendung der transformierten Koordinaten bei der Erzeugung der Zufallszahl bedeutet hier ebenfalls wieder, dass die transformierten Koordinaten mit den anderen zur Erzeugung der Zufallszahl zur Verfügung stehenden Werten beliebig verknüpft, mathematisch verrechnet und/oder aneinander angereiht, etc. werden.

Gemäß einer weiteren Ausführungsform wird bei der Erzeugung der Zufallszahl ein Zeitverlauf berücksichtigt, wobei eine Änderung der Realwelt-Koordinaten und/oder eine Änderung der Virtuellwelt-Koordinaten über den Zeitverlauf in die Zufallszahl eingeht. Die geänderten Koordinaten können jeweils als separate Werte betrachtet werden, die wiederum mit vorherigen Werten und anderen für die Zufallszahl zur Verfügung stehenden Werten miteinander verknüpft, verrechnet und/oder aneinander angereiht, etc. werden können. Durch die Berücksichtigung des Zeitverlaufs kann ausgenutzt werden, dass der Weg, auf welchem der Benutzer das virtuelle Objekt bis zu seiner Endposition bewegt, als zusätzliche Entropiequelle in die Erzeugung der Zufallszahl eingeht.

Durch den Zeitverlauf ist es ebenfalls möglich, Änderungen in der Umgebung, welche z. B. durch ein Schwenken der Kamera hervorgerufen werden, als weitere Quelle für Zufälligkeit zu verwenden. Insbesondere unabsichtliche Kamerabewegungen durch den Benutzer sind schwer vorherzusagen und dementsprechend stark zufällig.

Insbesondere kann es vorgesehen sein, dass für den Zeitverlauf in vorbestimmten Zeitintervallen (z. B. alle 0,5 Sekunden oder jede Sekunde) ein neuer Satz von Realwelt-Koordinaten und/oder Virtuellwelt-Koordinaten erzeugt wird, sofern sich die Realwelt-Koordinaten und/oder die Virtuellwelt-Koordinaten eines jeweiligen Punkts geändert haben.

Gemäß einer weiteren Ausführungsform werden die erzeugte Zufallszahl und/oder eine weitere Zufallszahl, welche auf anderem Wege erzeugt wurde, als Eingangswerte für eine kryptographische Hash-Funktion verwendet, wobei die Hash-Funktion einen Hash-Wert als Ergebnis liefert. Die weitere Zufallszahl kann z.B. von der elektronischen Recheneinrichtung stammen, die die Zufallszahl erzeugt hat. Die weitere Zufallszahl kann z. B. basierend auf einer Messung der Prozessortemperatur (thermische Rauschquelle), basierend auf Aktivitäten in einem Speicher oder basierend auf einer stochastisch verteilten Dauer eines elektrischen Umladevorgangs und dergleichen beruhen. Durch die Kombination der zwei verschiedenen Zufallszahlen mittels der kryptographischen Hash-Funktion wird die Zufälligkeit weiter erhöht. Selbst bei Kenntnis einer Zufallszahl wäre es für einen Angreifer praktisch unmöglich, den Hash-Wert vorherzusagen bzw. zu ermitteln.

Gemäß einer weiteren Ausführungsform werden die erzeugte Zufallszahl und/oder der Hash-Wert als Eingangswert für einen Zufallszahlengenerator verwendet. Der Eingangswert kann auch als "Seed" bezeichnet werden. Bei dem Zufallszahlengenerator kann es sich um einen so genannten CSPRNG ("Cryptographically Secure Pseudo Random Number Generator") handeln. Mit dem Zufallszahlengenerator können basierend auf dem Seed/Eingangswert sehr schnell viele weitere Zusatz-Zufallszahlen erzeugt werden. Die Zusatz-Zufallszahlen sind ebenfalls stark zufällig, da zumindest einer der Eingangswerte, nämlich die nach dem hierin beschriebenen Verfahren erzeugte Zufallszahl, ebenfalls stark zufällig ist. Bei der Zusatz-Zufallszahl handelt es sich insbesondere um einen von der Zufallszahl abgeleiteten Wert. Mit einer einmaligen Durchführung des hierin beschriebenen Verfahrens können auf diese Weise (mit hoher Geschwindigkeit) sehr viele starke Zusatz-Zufallszahlen erzeugt werden. Die Zusatz-Zufallszahlen können dann insbesondere in verschiedenen kryptographischen Anwendungen eingesetzt werden, wodurch z. B. die Kommunikation zwischen verschiedenen Teilnehmern gesichert werden kann.

Gemäß einer weiteren Ausführungsform wird das virtuelle Objekt beim Positionieren verschoben und/oder um eine oder mehrere Achsen gedreht und/oder in seiner Größe geändert. Durch das Verschieben (z.B. in drei Dimensionen), Drehen und die Veränderung der Größe werden zusätzliche Freiheitsgrade für den Benutzer eingeführt, was wiederum die Entropie vergrößert. Es versteht sich, dass die genannten Operationen virtuell vorgenommen werden, d. h. ein Verschieben wird dem Benutzer insbesondere auf der Anzeigeeinrichtung dargestellt, d. h. in der Augmented Reality.

Durch die vorgenannten Operationen beim Positionieren des virtuellen Objekts entsteht eine riesige Menge an Möglichkeiten für den Benutzer, das virtuelle Objekt zu positionieren. Allein durch die Drehung um beispielsweise drei Achsen wird die Anzahl der möglichen Positionen des virtuellen Objekts stark erhöht. Geht man von 0,1 Grad-Schritten bei der Drehung aus, so ergeben sich 3.600 verschiedene Positionen pro Achse. Durch die Kombination der Drehung in drei Achsen entstehen somit allein schon 3.600³ Möglichkeiten, d. h. etwa 46,7 Milliarden Möglichkeiten. Durch die Kombination mit einer entsprechenden Verschiebung und/oder Skalierung des virtuellen Objekts potenzieren sich die Möglichkeiten weiter.

Gemäß einer weiteren Ausführungsform sind die Erfassungseinheit und die Anzeigeeinrichtung Teil eines elektronischen Geräts, bevorzugt desselben elektronischen Geräts, wobei das elektronische Gerät insbesondere die Erzeugung der Zufallszahl durchführt. Die Erzeugung bzw. Berechnung der Zufallszahl kann dabei von einer elektronischen Recheneinrichtung des elektronischen Geräts durchgeführt werden. Durch die Erzeugung der Zufallszahl in einem einzigen Gerät ist insbesondere keine externe Übertragung z. B. der Realwelt- und/oder Virtuellwelt-Koordinaten notwendig, was potenziell unsicher sein kann. Bei dem elektronischen Gerät kann es sich beispielsweise um ein Smartphone, ein Tablet, eine Augmented Reality-Brille (AR-Brille), ein Notebook oder ein mit einer Kamera ausgestattetes Feldgerät handeln. Statt der Kamera kann auch eine andere Technologie, z.B. ein LIDAR (Light Detection And Ranging) oder ein LADAR (Laser Detection And Ranging) als Erfassungseinheit eingesetzt werden. Die Anzeigeeinheit kann grundsätzlich als Mensch-Maschine-Interface ausgebildet sein und ist bevorzugt ein Touchscreen. Im Falle eines Notebooks oder einer AR-Brille kann die Positionierung anstelle durch den Touchscreen auch über Maus und/oder Tastatur oder sonstige Eingabemöglichkeiten erfolgen.

Die Realwelt-Koordinaten können bevorzugt durch eine API zur Verfügung gestellt werden. Die API setzt auf der Aufnahme der Umgebung auf und erzeugt basierend auf der Aufnahme eine Punktwolke von Realwelt-Punkten, z.B. für Gegenstände in der Aufnahme, die von der der API zugrundeliegenden Software erkannt wurden. Bei der zugrundeliegenden Software kann es sich z. B. um ARCore von Google oder ARKit von Apple handeln. Es besteht dabei eine gewisse Zufälligkeit, welche Realwelt-Punkte von der API überhaupt ausgegeben werden und welche Realwelt-Koordinaten die Realwelt-Punkte von der API erhalten. Wie die Realwelt-Koordinaten von der zugrundeliegenden Software genau ermittelt werden, ist üblicherweise geheim, sodass hierdurch zum einen eine weitere Quelle von Zufälligkeit geschaffen wird und zum anderen ein Angriff zusätzlich erschwert wird.

Gemäß einer weiteren Ausführungsform wird die Zufallszahl und/oder die Zusatz-Zufallszahl verwendet, um eine verschlüsselte Datenverbindung zwischen dem elektronischen Gerät und einem Feldgerät herzustellen und bevorzugt das Feldgerät über die verschlüsselte Datenverbindung zu steuern und/oder zu konfigurieren. Über die verschlüsselte Datenverbindung kann somit die Steuerung eines industriellen Prozesses von dem elektronischen Gerät aus erfolgen. Die Steuerung ist dabei durch die Zufallszahl und/oder die Zusatz-Zufallszahl abgesichert. Insbesondere kann durch die Zufallszahl und/oder die Zusatz-Zufallszahl ein Verschlüsselungsschlüssel für die Datenverbindung erzeugt werden. Beispielsweise kann über die Datenverbindung ein Verhalten eines Servo-Antriebs oder eines Sensors verändert werden.

Bei der Erzeugung der Zufallszahl können eine oder mehrere der hierin ausgeführten Ausführungsformen/Möglichkeiten auch miteinander kombiniert und/oder nebeneinander verwendet werden. So können beispielsweise die ersten Ziffern der Zufallszahl durch einfache Aneinanderreihung der Werte der Realwelt- und Virtuellwelt-Koordinaten erzeugt werden. Weitere Ziffern der Zufallszahl können aus den Werten des vorgenannten Vektors und/oder durch die Transformation der Koordinaten geschaffen werden. Wiederum weitere Ziffern können auf der Grundlage des Zeitverlaufs erzeugt sein. Ebenfalls ist es möglich, dass die Erzeugung der Zufallszahl nur auf einer der hierin beschriebenen Möglichkeiten beruht.

Weiterer Gegenstand der Erfindung ist ein elektronisches Gerät mit einer Erfassungseinheit, einer Anzeigeeinrichtung und einer elektronischen Recheneinrichtung, wobei das Gerät ausgebildet ist,
- mittels der Erfassungseinheit eine Aufnahme einer Umgebung zu erzeugen,
- die Aufnahme mittels der Anzeigeeinrichtung darzustellen,
- die Positionierung eines virtuellen Objekts durch einen Benutzer in der Darstellung der Aufnahme in der Umgebung zu ermöglichen,
- für die Umgebung Realwelt-Koordinaten für Realwelt-Punkte in einem Realwelt-Koordinatensystem zu bestimmen,
- für das virtuelle Objekt Virtuellwelt-Koordinaten für einen oder mehrere Virtuellwelt-Punkte in einem Virtuellwelt-Koordinatensystem zu bestimmen,
- zumindest die Realwelt-Koordinaten eines Realwelt-Punktes der Umgebung und die Virtuellwelt-Koordinaten eines Virtuellwelt-Punktes des virtuellen Objekts zu verwenden, um eine Zufallszahl zu erzeugen, und
- bevorzugt die Zufallszahl und/oder einen von der Zufallszahl abgeleiteten Wert bei einer kryptographischen Anwendung einzusetzen.

Für das elektronische Gerät gelten die Ausführungen zu dem erfindungsgemäßen Verfahren entsprechend, dies gilt insbesondere hinsichtlich Vorteilen und Ausführungsformen.

Nachfolgend wird die Erfindung rein beispielhaft unter Bezugnahme auf die Zeichnungen dargestellt. Es zeigen:
- Fig. 1: schematisch die Erfassung der realen Umgebung;
- Fig. 2: eine Punktwolke mit Realwelt-Koordinaten;
- Fig. 3: das Positionieren eines virtuellen Objekts; und
- Fig. 4: den Ablauf zur Erzeugung einer Zufallszahl.

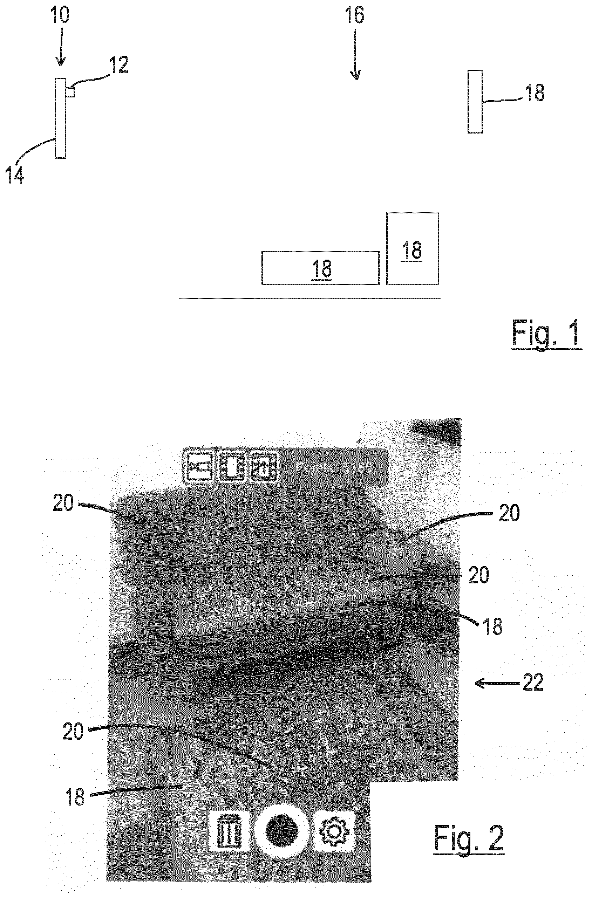

Fig. 1 zeigt ein elektronisches Gerät in Form eines Smartphones 10, welches eine Kamera 12 als Erfassungseinheit aufweist. Das Smartphone 10 verfügt zudem über einen Touchscreen 14 als Anzeigeeinrichtung.

Wie in Fig. 1 zu erkennen ist, wird mit dem Smartphone 10 eine Aufnahme einer Umgebung 16 angefertigt, wobei in der Umgebung 16 verschiedene Gegenstände 18, z. B. Möbel, vorhanden sind.

Eine beispielhafte Aufnahme der Umgebung 16 ist in Fig. 2 gezeigt, wobei in Fig. 2 auch die Gegenstände 18, d. h. die Möbel, dargestellt sind.

Eine auf dem Smartphone 10 ausgeführte Software liefert über eine API Realwelt-Punkte 20 (d. h. Punkte in einem Realwelt-Koordinatensystem). Die Realwelt-Punkte 20 umfassen jeweils Realwelt-Koordinaten für drei Dimensionen. In Fig. 2 ist zu erkennen, dass über die API eine Vielzahl von Realwelt-Punkten 20 ausgegeben wird, die gemeinsam eine Punktwolke 22 bilden.

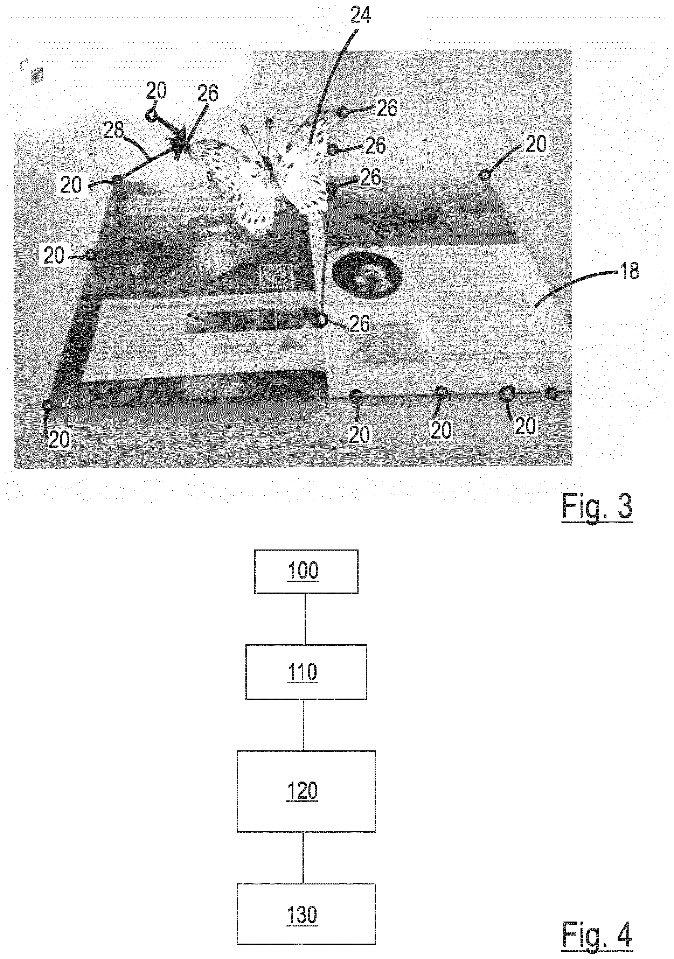

In Fig. 3 ist nun das Positionieren eines virtuellen Objekts 24 dargestellt, wobei das virtuelle Objekt 24 in Fig. 3 ein Schmetterling ist. Das virtuelle Objekt 24 wird in der Nähe eines Gegenstands 18, hier einer Zeitschrift, positioniert.

Ein Benutzer des Smartphones 10 kann über den Touchscreen 14 das virtuelle Objekt 24 an beliebiger Position positionieren. Zudem ist es möglich, das virtuelle Objekt 24 in drei Achsen zu rotieren und zu skalieren. Für das virtuelle Objekt 24 werden für mehrere Virtuellwelt-Punkte 26 (d. h. Punkte in einem Virtuellwelt-Koordinatensystem) Virtuellwelt-Koordinaten in drei Dimensionen bestimmt. Die Virtuellwelt-Koordinaten ändern sich entsprechend der vom Benutzer für das virtuelle Objekt 24 gewählten Position.

Für den Benutzer werden auf dem Touchscreen 14 üblicherweise die Realwelt-Punkte 20 und die Virtuellwelt-Punkte 26 nicht angezeigt.

Zwischen den Realwelt-Punkten 20 und den Virtuellwelt-Punkten 26 können zudem Vektoren 28 bestimmt werden, wie bereits ausgeführt.

Zur Erzeugung einer Zufallszahl kann, wie in Fig. 4 schematisch dargestellt, im Schritt 100 zunächst eine Aufnahme der Umgebung 16 erzeugt werden. Anschließend wird im Schritt 110 das virtuelle Objekt 24 in der Umgebung 16 positioniert. Im Schritt 120 werden sowohl Realwelt-Koordinaten für Realwelt-Punkte 20 als auch Virtuellwelt-Koordinaten für Virtuellwelt-Punkte 26 bestimmt. Die Realwelt-Koordinaten und die Virtuellwelt-Koordinaten werden im Schritt 120 dann verwendet, um eine Zufallszahl zu erzeugen. Im vorliegenden Beispiel können die Realwelt-Koordinaten für sämtliche Realwelt-Punkte 20 und die Virtuellwelt-Koordinaten für sämtliche Virtuellwelt-Punkte 26 aneinander angefügt werden (d. h. hintereinander geschrieben werden), um so die Zufallszahl zu erhalten. Weiterhin ist es auch möglich, durch den bereits beschriebenen Zufallszahlengenerator Zusatz-Zufallszahlen zu erzeugen.

Im Schritt 130 wird dann die Zufallszahl und/oder die Zusatz-Zufallszahl für eine kryptographische Anwendung eingesetzt, beispielsweise zur Herstellung einer verschlüsselten Verbindung zwischen dem Smartphone 10 und einem (nicht gezeigten) Feldgerät einer industriellen Anlage.

Durch die vielen Quellen von Zufälligkeit beim Prozess der Erzeugung der Zufallszahl, ist die erzeugte Zufallszahl stark zufällig und ermöglicht dadurch eine sichere Kommunikation, z. B. zwischen dem Smartphone 10 und dem Feldgerät.

### Bezugszeichenliste

- 10: Smartphone
- 12: Kamera
- 14: Touchscreen
- 16: Umgebung
- 18: Gegenstand
- 20: Realwelt-Punkt
- 22: Punktwolke
- 24: virtuelles Objekt
- 26: Virtuellwelt-Punkt
- 28: Vektor

- 100: Aufnahme der Umgebung
- 110: Positionieren des virtuellen Objekts
- 120: Erzeugen der Zufallszahl
- 130: kryptographische Anwendung

## Patentansprüche

1. Verfahren zur Erzeugung von Zufallszahlen für kryptographische Anwendungen, bei welchem
- mittels einer Erfassungseinheit (12) eine Aufnahme einer Umgebung (16) erzeugt wird,
- die Aufnahme mittels einer Anzeigeeinrichtung (14) dargestellt wird,
- ein virtuelles Objekt (24) durch einen Benutzer in der Darstellung der Aufnahme in der Umgebung (16) positioniert wird,
- für die Umgebung (16) Realwelt-Koordinaten für Realwelt-Punkte (20) in einem Realwelt-Koordinatensystem bestimmt werden,
- für das virtuelle Objekt (24) Virtuellwelt-Koordinaten für ein oder mehrere Virtuellwelt-Punkte (26) in einem Virtuellwelt-Koordinatensystem bestimmt werden,
- zumindest die Realwelt-Koordinaten eines Realwelt-Punktes (20) der Umgebung (16) und die Virtuellwelt-Koordinaten eines Virtuellwelt-Punktes (26) des virtuellen Objekts (24) verwendet werden, um eine Zufallszahl zu erzeugen, und
- die Zufallszahl und/oder einen von der Zufallszahl abgeleiteten Wert bei einer kryptographischen Anwendung eingesetzt wird.

2. Verfahren nach Anspruch 1,
wobei das Erzeugen der Zufallszahl umfasst, dass ein Vektor (28) zwischen zumindest einem Punkt der Umgebung (16) und einem Punkt des virtuellen Objekts (24) ermittelt und für die Zufallszahl verwendet wird.

3. Verfahren nach Anspruch 1 oder 2,
wobei das Erzeugen der Zufallszahl umfasst, dass zumindest die Realwelt-Koordinaten eines Realwelt-Punktes (20) der Umgebung (16) und die Virtuellwelt-Koordinaten eines Virtuellwelt-Punktes (26) des virtuellen Objekts (24) hintereinander gereiht werden.

4. Verfahren nach einem der vorstehenden Ansprüche,
wobei Realwelt-Koordinaten in Virtuellwelt-Koordinaten und/oder Virtuellwelt-Koordinaten in Realwelt-Koordinaten transformiert werden, wobei die transformierten Koordinaten bei der Erzeugung der Zufallszahl verwendet werden.

5. Verfahren nach einem der vorstehenden Ansprüche,
wobei bei der Erzeugung der Zufallszahl ein Zeitverlauf berücksichtigt wird, wobei eine Änderung der Realwelt-Koordinaten und/oder eine Änderung der Virtuellwelt-Koordinaten über den Zeitverlauf in die Zufallszahl eingeht.

6. Verfahren nach einem der vorstehenden Ansprüche,
wobei die erzeugte Zufallszahl und eine weitere Zufallszahl, welche auf anderem Wege erzeugt wurde, als Eingangswerte für eine kryptographische Hash-Funktion verwendet werden, wobei die Hash-Funktion einen Hash-Wert als Ergebnis liefert.

7. Verfahren nach einem der vorstehenden Ansprüche,
wobei die erzeugte Zufallszahl und/oder der Hash-Wert als Eingangswert für einen Zufallszahlengenerator verwendet werden, welcher insbesondere Zusatz-Zufallszahlen generiert.

8. Verfahren nach einem der vorstehenden Ansprüche,
wobei das virtuelle Objekt (24) beim Positionieren verschoben und/oder um ein oder mehrere Achsen gedreht und/oder in seiner Größe geändert wird.

9. Verfahren nach einem der vorstehenden Ansprüche,
wobei eine Vielzahl, beispielsweise zumindest 5, 10 oder 100, Realwelt-Koordinaten von Realwelt-Punkten (20) der Umgebung (16) und/oder von Virtuellwelt-Koordinaten von Virtuellwelt-Punktes (26) des virtuellen Objekts (24) verwendet werden, um die Zufallszahl zu erzeugen.

10. Verfahren nach einem der vorstehenden Ansprüche,
wobei die Erfassungseinheit (12) und die Anzeigeeinrichtung (14) Teil eines elektronischen Gerät sind, wobei das elektronische Gerät bevorzugt die Erzeugung der Zufallszahl durchführt.

11. Verfahren nach Anspruch 10,
wobei die Zufallszahl und/oder insbesondere die Zusatz-Zufallszahl verwendet wird, um eine verschlüsselte Datenverbindung zwischen dem elektronischen Gerät und einem Feldgerät herzustellen und bevorzugt das Feldgerät über die verschlüsselte Datenverbindung zu steuern und/oder zu konfigurieren.

12. Elektronisches Gerät (10) mit einer Erfassungseinheit (12), einer Anzeigeeinrichtung (14) und einer elektronischen Recheneinrichtung, wobei das Gerät ausgebildet ist,
- mittels der Erfassungseinheit (12) eine Aufnahme einer Umgebung (16) zu erzeugen,
- die Aufnahme mittels der Anzeigeeinrichtung (14) darzustellen,
- die Positionierung eines virtuellen Objekts (24) durch einen Benutzer in der Darstellung der Aufnahme in der Umgebung (16) zu ermöglichen,
- für die Umgebung (16) Realwelt-Koordinaten für Realwelt-Punkte (20) in einem Realwelt-Koordinatensystem zu bestimmen,
- für das virtuelle Objekt (24) Virtuellwelt-Koordinaten für ein oder mehrere Virtuellwelt-Punkte (26) in einem Virtuellwelt-Koordinatensystem zu bestimmen,
- zumindest die Realwelt-Koordinaten eines Realwelt-Punktes (20) der Umgebung (16) und die Virtuellwelt-Koordinaten eines Virtuellwelt-Punktes (26) des virtuellen Objekts (24) zu verwenden, um eine Zufallszahl zu erzeugen, und
- die Zufallszahl und/oder einen von der Zufallszahl abgeleiteten Wert bei einer kryptographischen Anwendung einzusetzen.

## Claims

1. A method of generating random numbers for cryptographic applications, in which
- a recording of an environment (16) is generated by means of a detection unit (12),
- the recording is presented by means of a display device (14),
- a virtual object (24) is positioned by a user in the presentation of the recording in the environment (16),
- real world coordinates for real world points (20) in a real world coordinate system are determined for the environment (16),
- virtual world coordinates for one or more virtual world points (26) in a virtual world coordinate system are determined for the virtual object (24),
- at least the real world coordinates of a real world point (20) of the environment (16) and the virtual world coordinates of a virtual world point (26) of the virtual object (24) are used to generate a random number, and
- the random number and/or a value derived from the random number is/are used in a cryptographic application.

2. A method in accordance with claim 1,
wherein the generation of the random number comprises determining a vector (28) between at least one point of the environment (16) and one point of the virtual object (24) and using said vector (28) for the random number.

3. A method in accordance with claim 1 or claim 2,
wherein the generation of the random number comprises lining up at least the real world coordinates of a real world point (20) of the environment (16) and the virtual world coordinates of a virtual world point (26) of the virtual object (24) after one another.

4. A method in accordance with any one of the preceding claims,
wherein real world coordinates are transformed into virtual world coordinates and/or virtual world coordinates are transformed into real world coordinates, with the transformed coordinates being used in the generation of the random number.

5. A method in accordance with any one of the preceding claims,
wherein a time duration is taken into account in the generation of the random number, wherein a change of the real world coordinates and/or a change of the virtual world coordinates over the time duration is/are included in the random number.

6. A method in accordance with any one of the preceding claims,
wherein the generated random number and a further random number which was generated in another manner are used as input values for a cryptographic hash function, wherein the hash function provides a hash value as a result.

7. A method in accordance with any one of the preceding claims,
wherein the generated random number and/or the hash value is/are used as an input value for a random number generator which in particular generates additional random numbers.

8. A method in accordance with any one of the preceding claims,
wherein the virtual object (24) is displaced and/or rotated about one or more axes and/or changed in its size during the positioning.

9. A method in accordance with any one of the preceding claims,
wherein a plurality of real world coordinates, for example at least 5, 10 or 100 real world coordinates, of real world points (20) of the environment (16) and/or of virtual world coordinates of virtual world points (26) of the virtual object (24) are used to generate the random number.

10. A method in accordance with any one of the preceding claims,
wherein the detection unit (12) and the display device (14) are part of an electronic device, wherein the electronic device preferably performs the generation of the random number.

11. A method in accordance with claim 10,
wherein the random number and/or in particular the additional random number is/are used to establish an encrypted data connection between the electronic device and a field device and preferably to control and/or to configure the field device via the encrypted data connection.

12. An electronic device (10) comprising a detection unit (12), a display device (14) and an electronic processing device, wherein the device is configured
- to generate a recording of an environment (16) by means of the detection unit (12),
- to present the recording by means of the display device (14),
- to enable the positioning of a virtual object (24) by a user in the presentation of the recording in the environment (16),
- to determine real world coordinates for real world points (20) in a real world coordinate system for the environment (16),
- to determine virtual world coordinates for one or more virtual world points (26) in a virtual world coordinate system for the virtual object (24),
- to use at least the real world coordinates of a real world point (20) of the environment (16) and the virtual world coordinates of a virtual world point (26) of the virtual object (24) to generate a random number, and
- to use the random number and/or a value derived from the random number in a cryptographic application.

## Revendications

1. Procédé de génération de nombres aléatoires pour des applications cryptographiques, dans lequel
- une prise de vue d'un environnement (16) est générée au moyen d'une unité d'acquisition (12),
- la prise de vue est représentée au moyen d'un dispositif d'affichage (14),
- un objet virtuel (24) est positionné dans la représentation de la prise de vue dans l'environnement (16) par un utilisateur,
- pour l'environnement (16), des coordonnées de monde réel sont déterminées pour des points de monde réel (20) dans un système de coordonnées de monde réel,
- pour l'objet virtuel (24), des coordonnées de monde virtuel sont déterminées pour un ou plusieurs points de monde virtuel (26) dans un système de coordonnées de monde virtuel,
- au moins les coordonnées de monde réel d'un point de monde réel (20) de l'environnement (16) et les coordonnées de monde virtuel d'un point de monde virtuel (26) de l'objet virtuel (24) sont utilisées pour générer un nombre aléatoire, et
- le nombre aléatoire et/ou une valeur dérivée du nombre aléatoire est utilisé lors d'une application cryptographique.

2. Procédé selon la revendication 1,
dans lequel la génération du nombre aléatoire comprend la détermination d'un vecteur (28) entre au moins un point de l'environnement (16) et un point de l'objet virtuel (24) et son utilisation pour le nombre aléatoire.

3. Procédé selon la revendication 1 ou 2,
dans lequel la génération du nombre aléatoire comprend la mise en série au moins des coordonnées de monde réel d'un point de monde réel (20) de l'environnement (16) et des coordonnées de monde virtuel d'un point de monde virtuel (26) de l'objet virtuel (24).

4. Procédé selon l'une des revendications précédentes,
dans lequel des coordonnées de monde réel sont transformées en coordonnées de monde virtuel et/ou des coordonnées de monde virtuel sont transformées en coordonnées de monde réel, les coordonnées transformées étant utilisées lors de la génération du nombre aléatoire.

5. Procédé selon l'une des revendications précédentes,
dans lequel une évolution dans le temps est prise en compte lors de la génération du nombre aléatoire, une modification des coordonnées de monde réel et/ou une modification des coordonnées de monde virtuel sur l'évolution dans le temps étant intégrée dans le nombre aléatoire.

6. Procédé selon l'une des revendications précédentes,
dans lequel le nombre aléatoire généré et un autre nombre aléatoire, généré d'une autre manière, sont utilisés comme valeurs d'entrée pour une fonction de hachage cryptographique, ladite fonction de hachage fournissant comme résultat une valeur de hachage.

7. Procédé selon l'une des revendications précédentes,
dans lequel le nombre aléatoire généré et/ou la valeur de hachage sont utilisés comme valeur d'entrée pour un générateur de nombres aléatoires qui génère en particulier des nombres aléatoires supplémentaires.

8. Procédé selon l'une des revendications précédentes,
dans lequel, lors du positionnement, l'objet virtuel (24) est translaté et/ou tourné autour d'un ou plusieurs axes et/ou modifié quant à sa taille.

9. Procédé selon l'une des revendications précédentes,
dans lequel une pluralité, par exemple au moins 5, 10 ou 100, de coordonnées de monde réel de points de monde réel (20) de l'environnement (16) et/ou de coordonnées de monde virtuel de points de monde virtuel (26) de l'objet virtuel (24) sont utilisées pour générer le nombre aléatoire.

10. Procédé selon l'une des revendications précédentes,
dans lequel l'unité d'acquisition (12) et le dispositif d'affichage (14) font partie d'un appareil électronique, de préférence, ledit appareil électronique mettant en oeuvre la génération du nombre aléatoire.

11. Procédé selon la revendication 10,
dans lequel le nombre aléatoire et/ou en particulier le nombre aléatoire supplémentaire est utilisé pour établir une liaison de données cryptée entre l'appareil électronique et un appareil de terrain et, de préférence, pour commander et/ou configurer l'appareil de terrain via la liaison de données cryptée.

12. Appareil électronique (10) comprenant une unité d'acquisition (12), un dispositif d'affichage (14) et un dispositif de calcul électronique, l'appareil étant réalisé pour
- générer une prise de vue d'un environnement (16) au moyen de l'unité d'acquisition (12),
- représenter la prise de vue au moyen du dispositif d'affichage (14),
- permettre le positionnement d'un objet virtuel (24) dans la représentation de la prise de vue dans l'environnement (16) par un utilisateur,
- pour l'environnement (16), déterminer des coordonnées de monde réel pour des points de monde réel (20) dans un système de coordonnées de monde réel,
- pour l'objet virtuel (24), déterminer des coordonnées de monde virtuel pour un ou plusieurs points de monde virtuel (26) dans un système de coordonnées de monde virtuel,
- utiliser au moins les coordonnées de monde réel d'un point de monde réel (20) de l'environnement (16) et les coordonnées de monde virtuel d'un point de monde virtuel (26) de l'objet virtuel (24) pour générer un nombre aléatoire, et
- utiliser le nombre aléatoire et/ou une valeur dérivée du nombre aléatoire lors d'une application cryptographique.
